# EUROPÄISCHE PATENTSCHRIFT

(11) **EP 1 611 061 B1**
(45) Veröffentlichungstag und Bekanntmachung des Hinweises auf die Patenterteilung: **20.06.2007**
(21) Anmeldenummer: 04715311.9
(22) Anmeldetag: 27.02.2004
(51) Int. Cl.: C03B 5/26, C03B 5/28, C21B 7/12, F27B 3/10, F27D 3/15

(54) **VORRICHTUNG UND VERFAHREN ZUM ABGIESSEN UND ABZAPFEN VON FL SSIGEN EISEN- UND MINERALSTOFFSCHMELZEN**
DEVICE AND METHOD FOR CASTING AND DRAWING OUT MOLTEN IRON-CONTAINING AND MINERAL MATERIALS
DISPOSITIF ET PROCEDE DE COULAGE ET DE SOUTIRAGE DE FUSIONS LIQUIDES DE SUBSTANCES FERRIQUES ET MINERALES

(30) Priorität: 02.04.2003 DE 10315007
(43) Veröffentlichungstag der Anmeldung: 04.01.2006
(73) Patentinhaber: THERMOSELECT AKTIENGESELLSCHAFT, FL-9490 Vaduz (LI)
(72) Erfinder: KISS, Günter, H., FL-9495 Triesen (LI)
(74) Vertreter: Pfenning, Meinig & Partner GbR
(86) Internationale Anmeldenummer: PCT/EP2004/001962
(87) Internationale Veröffentlichungsnummer: WO 2004/087588

(56) Entgegenhaltungen:
- EP-A- 0 976 806
- US-A- 1 572 580
- US-A- 1 643 601
- US-A- 2 186 718
- US-A- 5 567 218
- KLEIN K ET AL: "THERMOSELECT-VERGASUNG VON ABFALLEN UNTER ATMOSPHARENDRUCK ZUR ENERGIE- UND ROHSTOFFGEWINNUNG" VGB KRAFTWERKSTECHNIK, VGB KRAFTWERKSTECHNIK GMBH. ESSEN, DE, Bd. 75, Nr. 6, 1. Juni 1995 (1995-06-01), Seiten 529-533, XP000512003 ISSN: 0372-5715

## Beschreibung

Die Erfindung befasst sich mit einer Vorrichtung und einem Verfahren zum störungsfreien Abzapfen bzw. Abgiessen von in Bevorratungen aufbewahrten heißen Schmelzen zu deren Überführen in einen Guss.

In der Hochtemperaturtechnik ist die Handhabung flüssiger Schmelzen eine häufig anzutreffende Aufgabe. Die Handhabung flüssiger Schmelzen bei Temperaturen oberhalb von 1000 °C findet man beispielsweise in der Gießereitechnik, in der Glasindustrie oder in der Hochtemperaturvergasung nach dem THERMOSELECT Verfahren, um nur einige Beispiele zu nennen.
Grundsätzlich werden die Schmelzen in elektrisch beheizten oder durch externe Befeuerung beheizten Schmelzöfen bevorratet und dann zur Weiterverarbeitung (Strangguss, Flächenguss, Formguss o.ä.) abgegossen oder abgezapft.

Bei Hochtemperaturvergasung nach dem THERMOSELECT-Verfahren von unterschiedlichen Abfällen, wie Haus-, Gewerbe- oder Sondermüll, werden z. B. unsortierte Abfälle in einem Reaktor eingebracht. Die anorganischen Bestandteile, z.B. Eisen, werden bei Temperaturen von ca. 2000 °C eingeschmolzen. Die mineralische Schmelze wird dann über einen gekühlten Cu-Ring geleitet und mit H₂O granuliert. Oberhalb des Kühlrings sind Brenner angeordnet, um die Schmelze gesichert in das Granuliersystem umzulenken.

Problematisch bei diesen Verfahren, insbesondere dem THERMOSELECT-Verfahren, ist die Bildung von sogenannten Zapfen am Auslauf. Durch die Bildung von derartig erstarrten Schmelzzapfen am Auslauf der Öfen treten sehr häufig Betriebsunterbrechungen oder Betriebsstörungen auf. Zum Beispiel beginnt im THERMOSELECT-Verfahren nach einiger Zeit bei hohen Eisenanteilen die beim Abfließen erstarrende Schmelze am Kühlring anzuhaften. Es bildet sich ein Zapfen. Erst nach einer manuellen Entfernung des Zapfens kann der Prozess des Abgusses fortgeführt werden.

Weiterhin offenbart die US 1,643,601 einen Schmelzofen mit einer Kühlvorrichtung, wobei ein Instrument mit einer Innenkühlung vorgesehen ist. Die Kante des Instruments kann zum Entfernen von Zapfen verwendet werden und durch einen Antrieb betätigt werden.

In der US 2,186,718 ist eine Methode und eine Vorrichtung zur Entnahme von geschmolzenem Glas aus einem Glasschmelzofen beschrieben. Dabei wird das geschmolzene Glas unter Kontrolle der Temperatur entnommen, so dass eine definierte Flussrate des Glases gewährleistet ist.

In der US 5,567,218 ist eine Vorrichtung zur Extraktion beschrieben, bei der ein regulierter Fluss eines geschmolzenen Materials in eine kalte Schmelzvorrichtung gegossen wird. Die Schmelzvorrichtung hat dabei zumindest teilsweise eine am Boden sich befindende Ausflussöffnung.

Ebenso ist in der US 1,572,580 eine Methode und eine Vorrichtung zum Abstich geschmolzenen Glases beschrieben.

Aufgabe der vorliegenden Erfindung ist es nun, eine Vorrichtung und ein Verfahren anzugeben, mit dem ein kontinuierlicher, störungsfreier Abguss bzw. Abfluss von flüssigen, über 1000 °C heißen Schmelzen aus Bevorratungen möglich ist.

Die Aufgabe wird erfüllt durch die Entwicklung einer Vorrichtung gemäß Anspruch 1 und einem Verfahren gemäß Anspruch 9. Die Unteransprüche 2 bis 8 stellen bevorzugte Ausführungen der Vorrichtung gemäß Anspruch 1 dar. Entsprechend stellen die Unteransprüche 10 bis 12 Ausführungen des Verfahrens gemäß Anspruch 9 dar.

Demnach ist erfindungsgemäß ein Instrument (im Weiteren als Zapfenschläger bezeichnet) zum mechanischen Entfernen von sich an dem Abfluss eines die Schmelze bevorratenden Behältnisses durch Erstarrung bildenden Zapfen vorgesehen. Die Erstarrung der Schmelze tritt ein, weil der Schmelzabfluss in der einen oder anderen Form eine Kühlvorrichtung umfasst. Z. B. kann diese Kühlung dadurch stattfinden, dass der Abfluss Raumtemperaturen ausgesetzt wird. Erfindungsgemäß ist der Zapfenschläger am Schmelzablauf angebracht und weiterhin dadurch gekennzeichnet, dass er in einer Ruheposition oder auch Endlageposition verweilt, bevor der Entfernungsprozess durchgeführt wird. Der Zapfenschläger blockiert dabei in seiner Endlageposition nicht den Abfluss. Weiterhin sieht hinsichtlich der Bewegung des Zapfenschlägers die Bewegung in der Ebene senkrecht zu der Ausflussrichtung vor. Dabei wird das Schwert auf einer Kreisbahn bewegt, die den gesamten Schmelzablauf überdeckt.

Die vorteilhafte Wirkung dieser Erfindung liegt in der Möglichkeit, den Betrieb des Abflusses für die Schmelze ohne manuelle Eingriffe aufrecht zu erhalten.

Die Erfindung sieht in einer bevorzugten Ausführung einen oberhalb des Schmelzablaufes angeordneten wassergekühlten Kupferauslaufring vor. Durch die hohe Wärmeleitfähigkeit des Kupferrings können sich keine festen Verbindungen zwischen Zapfen und Auslaufring bilden. Des Weiteren wird ein Schmelzablauf von vorzugsweise 200 mm bis 800 mm, ganz besonders bevorzugt von 500 mm, verwendet.

In einer weiteren bevorzugten Variante ist die Ruhelageposition als gekühlter Bereich ausgeführt. Es bietet sich hierbei an, diesen Bereich von der Strahlung zur Heizung des Schmelzbehälters abzuschirmen. In diesem Zusammenhang ist auch eine Ausführung denkbar, nach der der Zapfenschläger durch eine Innenkühlung gekühlt wird, wodurch eine Materialermüdung verhindert wird. Ebenfalls um Spannungen oder Materialermüdungen zu verhindern, kann ein Gehäuse als gekühlte Gusskonstruktion um die Ruheposition des Zapfenschlägers gebildet sein.

Der Abstand zwischen Bewegungsebene des Zapfenschlägers und Auslaufring ist möglichst kurz. Er sollte nicht mehr als 420 mm, vorzugsweise aber sogar weniger als 200 mm betragen. Um permanent die Zapfenbildung zu unterdrücken, werden Bewegungen mit Zykluszeiten von 1 bis 3, vorzugsweise 2 Sekunden vorgeschlagen.

In einer weiteren Ausführung kann der Zapfenschläger die Form eines Schwertes annehmen. Als besonders effizient hat sich in diesem Zusammenhang ein hydraulischer Antrieb des Schwertes herausgestellt.

In einer weiteren Ausführung ist ein durch den Zapfenschläger ausgelöster Registriermechanismus vorgesehen. Durch diesen Registriermechanismus wird erfasst, ob der Zapfenschläger seine Endlageposition einnimmt. Erreicht der Zapfenschläger seine Endlage nicht, was die Bildung eines durch den Zapfenschläger nicht entfernbaren Zapfens impliziert, erfolgt die Zuschaltung einer den Zapfen oberhalb des Abflusses einschmelzenden O₂-Lanze automatisch. Dadurch wird der Zapfen durch einen einem Schneidbrenner ähnlichen Mechanismus abgeschnitten oder oxydiert. Alternativ sind oberhalb des gekühlten Cu-Auslaufrings ein oder mehrere 3-Kanalbrenner angeordnet, um in diesem Fall den Schmelzablauf von erstarrtem Material freizuhalten.

## Patentansprüche

1. Schmelzofen mit einer elektrischen oder externen Befeuerung zur Bevorratung von Schmelzen, einem eine Kühlvorrichtung umfassenden Schmelzeablauf und einem am Schmelzeablauf angeordneten Instrument zum mechanischen Entfernen von den Schmelzeablauf blockierenden Zapfen, wobei das Instrument zum Entfernen der Zapfen seitlich am Schmelzeablauf, den Schmelzeablauf nicht blockierend, in einer Ruheposition gelagert ist,
**dadurch gekennzeichnet, dass**
das Instrument zur Entfernung der Zapfen in der Ebene senkrecht zu der Ausflussrichtung der Schmelze in einer Kreisbahn bewegbar ist.

2. Schmelzofen nach Anspruch 1, **dadurch gekennzeichnet, dass** der Zapfenschläger in der Ruheposition gekühlt und von der den Schmelzofen anheizenden Wärmestrahlung abgeschirmt ist.

3. Schmelzofen nach einem der vorhergehenden Ansprüche, **dadurch gekennzeichnet, dass** das Instrument zum Entfernen der Zapfen eine Innenkühlung aufweist.

4. Schmelzofen nach einem der beiden vorhergehenden Ansprüche, **dadurch gekennzeichnet, dass** das Instrument über einen hydraulischen Antrieb verfügt.

5. Schmelzofen nach einem der vorhergehenden Ansprüche, **dadurch gekennzeichnet, dass** das Instrument zum Entfernen der Zapfen schwertförmig ist, wobei die Schnittkante in der Ebene senkrecht zur Ausflussrichtung der Schmelze ausgerichtet ist.

6. Schmelzofen nach einem der vorhergehenden Ansprüche, **dadurch gekennzeichnet, dass** der Schmelzablauf einen Durchmesser von 200 mm bis 800 mm, vorzugsweise 500 mm, aufweist.

7. Schmelzofen nach einem der beiden vorhergehenden Ansprüche, **dadurch gekennzeichnet, dass** oberhalb des Schmelzeablaufs ein wassergekühlter Kupferring angeordnet ist.

8. Schmelzofen nach einem der vorhergehenden Ansprüche, **gekennzeichnet durch** einen **durch** das Instrument zum Entfernen der Zapfen in der Ruheposition ausgelösten Registriermechanismus zur Erfassung dieser Position des Instrumentes zum Entfernen der Zapfen.

9. Verfahren zum Entfernen von den Schmelzeablauf verstopfenden Zapfen an einem mit einem Schmelzeablauf versehenen Schmelzofen nach einem der Ansprüche 1 bis 8, wobei die Zapfen durch Abbrechen oder Abschlagen oder Abspalten mit Hilfe des in einem der Ansprüche 1 bis 8 angeführten Instrumentes zum Entfernen von Zapfen entfernt werden, **dadurch gekennzeichnet, dass** das Instrument in der Ebene senkrecht zu der Ausflussrichtung der Schmelze in einer Kreisbahn bewegt wird.

10. Verfahren nach Anspruch 9, **dadurch gekennzeichnet, dass** der Abschlag-, Abbrech- oder Abspaltprozess periodisch mit Zykluszeiten von 1 bis 3 Sekunden vorgenommen wird.

11. Verfahren nach einem der Ansprüche 9 oder 10, **dadurch gekennzeichnet, dass** das Instrument zum Entfernen der Zapfen hydraulisch bewegt wird.

12. Verfahren nach einem der Ansprüche 9 bis 11, **dadurch gekennzeichnet, dass** das Instrument zum Entfernen von Zapfen in seiner Ruheposition einen Mechanismus zur Registrierung von dessen Einnahme der Endlageposition auslöst und bei Nicht-Einnahme der Ruheposition durch das Instrument zum Entfernen der Zapfen innerhalb eines vorgegebenen Zeitintervalls eine weitere Vorrichtung zur Zapfenentfernung zugeschaltet wird oder ein Warnsignal ausgegeben wird.

## Claims

1. Melting furnace with electrical or external firing for the provision of molten masses, with a melt outflow that surrounds a cooling device, and with an instrument positioned at the melt outflow for the mechanical removal of plugs that close off the melt outflow, the instrument for removing the plugs being mounted, in its non-operating position, at the side of the melt outflow in such a manner that it does not block the melt outflow,
**characterised in that**
the instrument for removing the plugs can be moved in a circular path in the plane perpendicular to the outflow direction of the molten mass.

2. Melting furnace as in claim 1,
**characterised in that**
the plug tapper is, when in its non-operating position, cooled and shielded from the radiated heat that heats up the melting oven.

3. Melting furnace as in one of the preceding claims,
**characterised in that**
the instrument for removing the plugs has an internal cooling system.

4. Melting furnace as in one of the two preceding claims,
**characterised in that**
the instrument has a hydraulic drive mechanism.

5. Melting furnace as in one of the preceding claims,
**characterised in that**
the instrument for removing the plugs is sword-shaped, the cutting edge being aligned in the plane perpendicular to the outflow direction of the molten mass.

6. Melting furnace as in one of the preceding claims,
**characterised in that**
the melt outflow has a diameter of between 200 mm and 800 mm, preferably of 500 m.

7. Melting furnace as in one of the two preceding claims,
**characterised in that**
a water-cooled copper ring is positioned above the melt outflow.

8. Melting furnace as in one of the preceding claims,
**characterised by**
a register mechanism, triggered in the non-operating position by the instrument for removing the plugs, for detecting this position of the instrument for removing the plugs.

9. Method for removing plugs that close off the melt outflow on a melting furnace as in one of claims 1 to 8, wherein the plugs are removed by being broken off or knocked off or split off by means of the instrument for removing plugs described in one of claims 1 to 8,
**characterised in that**
the instrument is moved in a circular path in the plane perpendicular to the outflow direction of the molten mass.

10. Method as in claim 9,
**characterised in that**
the breaking off, knocking off or splitting off process is carried out periodically with cycle times of between 1 and 3 seconds.

11. Method as in one of claims 9 or 10,
**characterised in that**
the instrument for removing plugs is moved hydraulically.

12. Method as in one of claims 9 to 11,
**characterised in that**
the instrument for removing plugs triggers, when in its non-operating position, a mechanism for registering that it has taken up its end position, and if the non-operating position is not taken up within a predetermined interval of time by the instrument for removing plugs, another device for plug removal is switched on or a warning signal is given.

## Revendications

1. Four de fusion, comportant un système de chauffage électrique ou externe pour le stockage de coulées, une goulotte de coulée comprenant un dispositif de refroidissement et un instrument disposé au niveau de la goulotte de coulée servant à éliminer mécaniquement des bouchons bloquant la goulotte de coulée, l'instrument servant à éliminer les bouchons étant positionnés sur le côté de la goulotte de coulée dans une position de repos, sans bloquer la goulotte de coulée,
**caractérisé en ce que**
l'instrument servant à éliminer les bouchons est déplaçable suivant une trajectoire circulaire dans le plan perpendiculaire à la direction du flux de la coulée.

2. Four de fusion selon la revendication 1, **caractérisé en ce que** le dispositif servant à éliminer les bouchons dans la position de repos est refroidi et protégé du rayonnement de chaleur chauffant le four de fusion.

3. Four de fusion selon l'une quelconque des revendications précédentes, **caractérisé en ce que** l'instrument servant à éliminer les bouchons présente un système de refroidissement interne.

4. Four de fusion selon l'une quelconque des deux revendications précédentes, **caractérisé en ce que** l'instrument dispose d'un dispositif d'entrainement hydraulique.

5. Four de fusion selon l'une quelconque des revendications précédentes, **caractérisé en ce que** l'instrument servant à éliminer les bouchons est ensiforme, l'arête coupante étant alignée dans le plan perpendiculaire à la direction du flux de la coulée.

6. Four de fusion selon l'une quelconque des revendications précédentes, **caractérisé en ce que** la goulotte de coulée présente un diamètre compris entre 200 mm et 800 mm, de préférence de 500 mm.

7. Four de fusion selon l'une des deux revendications précédentes, **caractérisé en ce qu'**un anneau en cuivre refroidi avec de l'eau est disposé au-dessus de la goulotte de coulée.

8. Four de fusion selon l'une quelconque des revendications précédentes, **caractérisé par** un mécanisme d'enregistrement déclenché par l'instrument servant à éliminer les bouchons dans la position de repos, pour détecter cette position de l'instrument servant à éliminer les bouchons.

9. Procédé pour éliminer des bouchons de la goulotte de coulée d'un four de fusion pourvu d'une goulotte de coulée selon l'une quelconque des revendications 1 à 8, les bouchons étant éliminés en les cassant ou coupant ou détachant à l'aide de l'instrument servant à éliminer les bouchons cité dans l'une quelconque des revendications 1 à 8, **caractérisé en ce que** l'instrument est déplacé suivant une trajectoire circulaire dans le plan perpendiculaire à la direction du flux de la coulée.

10. Procédé selon la revendication 9, **caractérisé en ce que** le processus consistant à casser ou couper ou détacher est effectué périodiquement avec des temps de cycles de 1 à 3 secondes.

11. Procédé selon l'une des revendications 9 ou 10, **caractérisé en ce que** l'instrument servant à éliminer les bouchons est déplacé de manière hydraulique.

12. Procédé selon l'une quelconque des revendications 9 à 11, **caractérisé en ce que** l'instrument servant à éliminer les bouchons déclenche, dans sa position de repos, un mécanisme servant à enregistrer sa valeur de position finale et **en ce qu'**un dispositif supplémentaire servant à éliminer les bouchons est mis en marche ou **en ce qu'**une alerte est émise, lorsque la position de repos n'a pas été évaluée par l'instrument servant à éliminer les bouchons dans un intervalle de temps prédéterminé.
